# FASCICULE DE BREVET EUROPEEN

(11) **EP 0 598 657 B1**
(45) Date de publication et mention de la délivrance du brevet: **12.06.1996**
(21) Numéro de dépôt: 93402779.8
(22) Date de dépôt: 16.11.1993
(51) Int. Cl.: B01D 3/34, B01D 3/14

(54) **Procédé de régénération d'un dessicant liquide**
Verfahren zum Regenerieren von flüssigen Trocknungsmitteln
Process for the regeneration of liquid desiccants

(30) Priorité: 19.11.1992 FR 9214020
(43) Date de publication de la demande: 25.05.1994
(73) Titulaire: INSTITUT FRANCAIS DU PETROLE, F-92502 Rueil-Malmaison (FR); NOUVELLES APPLICATIONS TECHNOLOGIQUES, F-92500 Rueil-Malmaison (FR)
(72) Inventeur: Lermite, Christophe, F-75014 Paris (FR); Chambon, Bernard, F-78260 Acheres (FR); Amande, Jean-Claude, F-78450 Villepreux (FR); Larue, Joseph, F-92500 Rueil Malmaison (FR)
(74) Mandataire: Andreeff, François

(56) Documents cités:
- EP-A- 0 114 469
- DE-A- 2 046 050
- DE-A- 2 649 967
- US-A- 3 471 370
- US-A- 4 009 083

## Description

Il est courant d'avoir à déshydrater un courant gazeux, par exemple un gaz naturel ou un gaz de raffinerie, pour contrôler le point de rosée eau de ce courant gazeux, pour éviter la formation d'hydrates, ou de glace, ou pour toute autre raison.

Dans ce but, il est courant de mettre le gaz en contact avec un dessicant liquide hydrophile, et parmi ces derniers la famille chimique des glycols est d'un usage très répandu. Le plus souvent on utilise du triéthylène glycol (TEG), mais à l'occasion le monoéthylène glycol (MEG), le diéthylène glycol (DEG) ou le tétraéthylène glycol (T4EG) peuvent être également employés. Le dessicant chargé en eau est alors envoyé vers un dispositif de régénération thermique, dans lequel la majeure partie de l'eau absorbée par le dessicant est vaporisée et éliminée.

Cependant il est bien connu que l'on ne peut séparer totalement l'eau du dessicant par voie thermique à pression atmosphérique, lorsque ce dernier se dégrade à une température inférieure à sa température normale d'ébullition. Par exemple le TEG bout à environ 285°C, mais on se limite généralement à 204°C lors de la régénération, la pureté du TEG régénéré étant alors voisine de 99% masse.

Si l'on désire une pureté supérieure, un moyen classique consiste à faire suivre l'étape de reconcentration thermique d'une étape de strippage par du gaz sec ou à faible teneur en eau, par exemple une partie du courant gazeux déshydraté par le dessicant. Ce type de procédé, décrit en détail dans le brevet US-A-3105748, permet d'atteindre des teneurs voisines de 99,9% masse pour le dessicant régénéré.

Cependant, l'emploi d'un gaz comme agent de strippage, outre qu'il représente généralement une perte sèche, présente l'inconvénient d'empêcher la condensation des hydrocarbures et autres produits lourds absorbés par le dessicant lors de l'étape de déshydratation, et vaporisés en même temps que l'eau par rebouillage et strippage. En particulier, les aromatiques ainsi libérés ne peuvent être recondensés et sont torchés ou évacués tels quels dans l'atmosphère.

Pour éviter ces inconvénients, le gaz de strippage peut être remplacé par un agent condensable, généralement un hydrocarbure ou un mélange d'hydrocarbures, tournant en boucle. Dans ce type de procédé, décrit en détail dans le brevet US-A-3471370, l'agent de strippage est récupéré après condensation en tête de l'étape de reconcentration thermique et séparation par démixtion de l'eau également condensée.

Dans le cas où l'on désire une très haute pureté du dessicant régénéré, par exemple supérieure à 99,99% masse dans le cas du TEG, il est nécessaire d'utiliser un agent de strippage lui-même très sec. Par exemple, si l'agent de strippage est une partie du courant gazeux déshydraté, il a été proposé de diminuer encore la teneur en eau de ce gaz en le mettant en contact avec une partie du dessicant régénéré à haute pureté, ladite partie étant ensuite renvoyée vers l'étape de strippage. Ce type de procédé est décrit en détail dans le brevet US-A-3867112. Dans le cas où l'on utilise un agent de strippage condensable, la déshydratation poussée de cet agent par des moyens divers a également été proposée.

Il a été découvert, et c'est là l'objet de la présente invention, qu'il était possible de régénérer l'agent dessicant jusqu'à une très grande pureté, en limitant l'émission d'hydrocarbures lourds, et ce de manière économique, en utilisant un agent de strippage condensable et en le déshydratant de manière innovante.

D'une manière générale, la présente invention concerne un procédé de régénération d'un dessicant liquide, utilisant un agent de strippage, qui est liquide à température et pression ambiante, et forme un hétéroazéotrope avec l'eau, le procédé comprend les étapes suivantes:
a) une étape de rebouillage du dessicant liquide chargé en eau;
b) une étape de distillation dudit dessicant, comprenant au moins un étage de rectification;
c) une étape de strippage du dessicant liquide partiellement régénéré lors des étapes (a) et (b), par l'agent de strippage vaporisé;
d) une étape de condensation de la vapeur sortant de l'étape de distillation (b), condensation générant deux phases liquides, l'une majoritaire en eau, l'autre majoritaire en agent de strippage;
e) le chauffage de la phase liquide riche en agent de strippage issue de l'étape (d), chauffage générant une phase vapeur plus riche en eau que ladite phase liquide et une phase liquide appauvrie en eau; et
f) le renvoi de la phase liquide issue de l'étape (e) vers l'étape (c).

Il a été découvert, et c'est là l'un des principaux objets de la présente invention, que le fait de chauffer l'agent de strippage liquide sortant saturé en eau de l'étape de condensation (d), permet, en mettant à profit l'hétéroazéotrope entre l'eau et l'agent de strippage, de diminuer de manière substantielle la quantité d'eau résiduelle dans l'agent de strippage pour un faible coût énergétique, et ceci même si la température d'ébullition de l'agent de strippage est inférieure à la température d'ébullition de l'eau.

Le procédé selon l'invention est ainsi particulièrement adapté lorsque l'on désire régénérer l'agent dessicant jusqu'à une très grande pureté, ce qui impose de disposer d'un agent de strippage lui-même quasiment anhydre; et que l'on ne veut pas utiliser à fond perdu un agent de strippage non-condensable, soit pour des raisons économiques, soit pour limiter au maximum l'émission vers l'atmosphère d'hydrocarbures supérieurs ou d'autres produits de volatilité comparable.

Dans le procédé de l'invention, les étapes (b) et (c) peuvent être réalisées successivement dans des dispositifs distincts, ou simultanément dans le même dispositif.

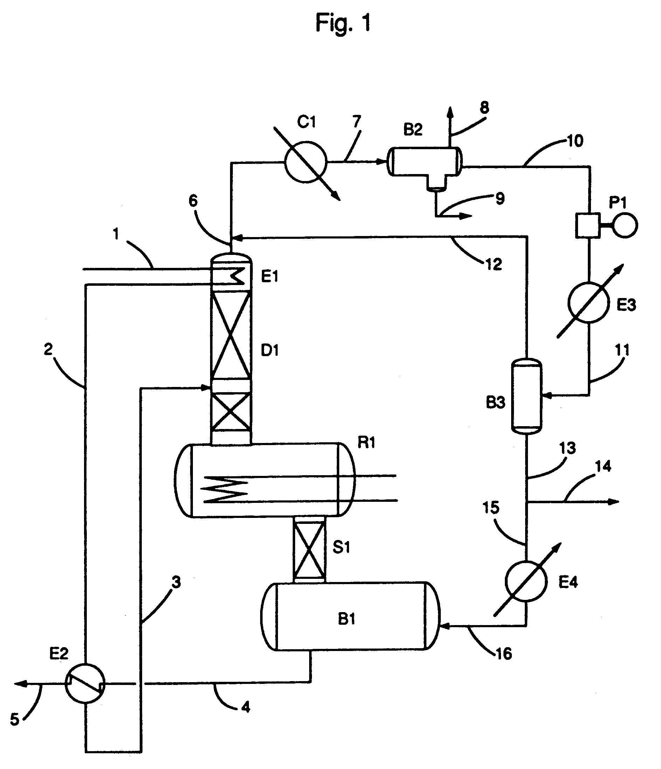

Un mode particulier de réalisation du procédé de l'invention est décrit plus en détail ci-après en liaison avec la figure 1. Dans ce mode de réalisation, la phase vapeur générée lors de l'étape (e) peut être renvoyée en amont de l'étape (d) et la phase liquide appauvrie en eau à l'issue de l'étape(e)est vaporisée avant d'être envoyée vers l'étape (a) ou vers l'étape (c).

La charge à traiter arrive par le conduit 1 dans l'échangeur E1, situé en tête du dispositif de distillation D1; de là elle est envoyée par le conduit 2 jusqu'à l'échangeur E2, où elle est chauffée par le dessicant liquide régénéré arrivant par le conduit 4. Sortant de l'échangeur E2 par le conduit 3, la charge pénètre dans le dispositif de distillation D1, lequel surmonte successivement de haut en bas une zone de rebouillage R1, une zone de strippage S1 et un ballon-réservoir B1.

La température dans la zone de rebouillage R1 est généralement comprise entre 150°C et 250°C.

La pression absolue dans l'ensemble constitué du dispositif de distillation D1, du rebouilleur R1, de la zone de strippage S1 et du ballon B1 est généralement comprise entre 0,5 et 2 bar.

Dans le rebouilleur R1, la majeure partie de l'eau et des produits plus légers que l'agent dessicant absorbés par ce dernier sont vaporisés. Le dessicant liquide appauvri en eau tombe par gravité du rebouilleur R1 dans la zone de strippage S1, où il est mis en contact à contre-courant avec l'agent de strippage déshydraté arrivant dans le ballon B1 par le conduit 16.

Le dessicant liquide régénéré sort du ballon B1 par le conduit 4, traverse l'échangeur E2, où il est refroidi par la charge arrivant par le conduit 2, et est évacué du procédé par le conduit 5.

L'eau, l'agent de strippage et les autres produits vaporisés dans le rebouilleur R1 quittent le dispositif de distillation D1 à travers l'échangeur E1 par le conduit 6, sont mélangés, le cas échéant, avec la vapeur arrivant du ballon B3 par le conduit 12, et refroidis dans le condenseur C1, dont ils sortent par le conduit 7 pour entrer dans le ballon B2.

De là, les composés les plus légers sont évacués du procédé sous forme gazeuse par le conduit 8; l'eau est évacuée du procédé par le conduit 9 avec les autres produits hydrophiles; l'agent de strippage et les autres produits hydrophobes sont envoyés, saturés en eau, par le conduit 10 et à travers la pompe P1, vers l'échangeur E3, où ils sont partiellement vaporisés et envoyés par le conduit 11 vers le ballon B3.

D'une manière générale, la phase vapeur générée dans l'échangeur E3, plus riche en eau que le liquide arrivant par le conduit 10, peut être évacuée du procédé. Cependant, il est plus avantageux de la renvoyer par le conduit 12 en amont du condenseur C1 avec la vapeur sortant du dispositif de distillation D1 par le conduit 6.

La phase liquide sortant du ballon B3 par le conduit 13, plus pauvre en eau que le liquide arrivant par le conduit 10, est divisée de manière à maintenir constant le débit d'agent de strippage dans la boucle : une partie fixe est envoyée vers l'évaporateur E4 par le conduit 15; un éventuel excès, dû à l'absorption par l'agent dessicant d'une partie du courant gazeux traité lors de l'étape de déshydratation (non représentée sur la figure), est évacuée du procédé par le conduit 14.

La phase vapeur sortant de l'évaporateur E4 par le conduit 16 est envoyée dans le ballon B1.

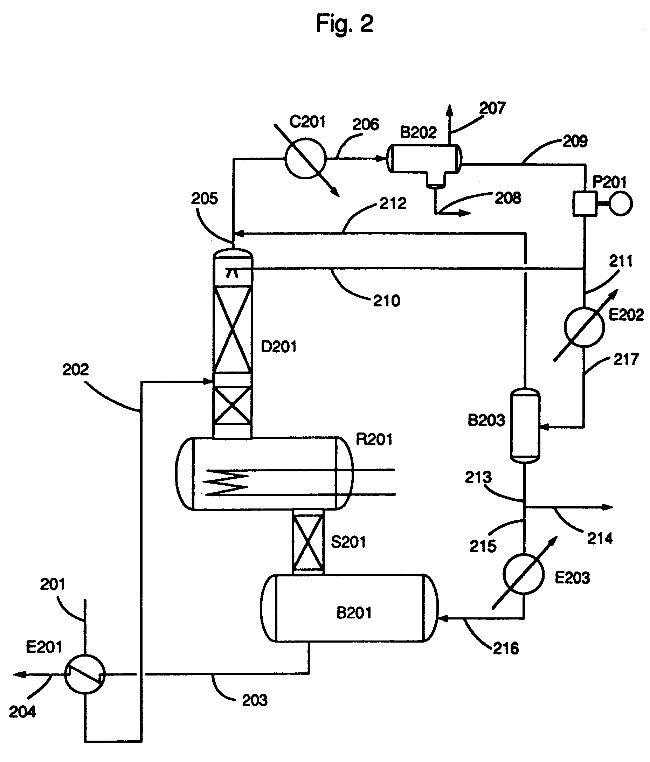

Un second mode particulier de réalisation du procédé selon l'invention est décrit ci-après en liaison avec la figure 2.

Dans ce mode de réalisation, une partie de l'agent de strippage séparé après l'étape (d) est mis en contact à contre-courant avec la vapeur dans l'étape (b)

La charge à traiter arrive par le conduit 201 dans l'échangeur E201, où elle est chauffée par le dessicant liquide régénéré arrivant par le conduit 203. Sortant de l'échangeur E201 par le conduit 202, la charge pénètre dans le dispositif de distillation D201, lequel surmonte successivement de haut en bas une zone de rebouillage R201, une zone de strippage S201 et un ballon-réservoir B201.

Dans le dispositif de distillation D201, la vapeur montant de la zone de rebouillage R201 est mise en contact à contre-courant avec une phase liquide composée majoritairement d'agent de strippage arrivant par le conduit 210.

La température dans la zone de rebouillage R201 est généralement comprise entre 150°C et 250°C.

La pression absolue dans l'ensemble constitué du dispositif de distillation D201, du rebouilleur R201, de la zone de strippage S201 et du ballon B201 est généralement comprise entre 0,5 et 2 bar.

Dans le rebouilleur R201, la majeure partie de l'eau et des produits plus légers que l'agent dessicant absorbés par ce dernier sont vaporisés. Le dessicant liquide appauvri en eau tombe par gravité du rebouilleur R201 dans la zone de strippage S201, où il est mis en contact à contre-courant avec l'agent de strippage déshydraté arrivant dans le ballon B201 par le conduit 216.

Le dessicant liquide régénéré sort du ballon B201 par le conduit 203, traverse l'échangeur E201, où il est refroidi par la charge arrivant par le conduit 201, et est évacué du procédé par le conduit 204.

L'eau, l'agent de strippage et les autres produits vaporisés dans le rebouilleur R201 quittent le dispositif de distillation D201 par le conduit 205, sont mélangés, le cas échéant, avec la vapeur arrivant du ballon B203 par le conduit 212, et refroidis dans le condenseur C201, dont ils sortent par le conduit 206 pour entrer dans le ballon B202.

De là, les composés les plus légers sont évacués du procédé sous forme gazeuse par le conduit 207; l'eau est évacuée du procédé par le conduit 208 avec les autres produits hydrophiles; l'agent de strippage et les autres produits hydrophobes sont envoyés, saturés en eau, via le conduit 209 et à travers la pompe P201, pour partie par le conduit 211 vers l'échangeur E202, pour partie par le conduit 210 vers la zone de distillation D201 où elle est mise en contact à contre-courant avec la vapeur montant de la zone de rebouillage R201 à travers la zone de distillation D201. La première partie est partiellement vaporisée dans l'échangeur E202 et envoyée par le conduit 217 vers le ballon B203.

D'une manière générale, la phase vapeur générée dans l'échangeur E202, plus riche en eau que le liquide arrivant par le conduit 211, peut être évacuée du procédé. Cependant, il est plus avantageux de la renvoyer par le conduit 212 en amont du condenseur C201 avec la vapeur sortant du dispositif de distillation D201 par le conduit 205.

La phase liquide sortant du ballon B203 par le conduit 213, plus pauvre en eau que le liquide arrivant par le conduit 211, est divisée de manière à maintenir constant le débit d'agent de strippage dans la boucle : une partie fixe est envoyée vers l'évaporateur E203 par le conduit 215; un éventuel excès, dû à l'absorption par l'agent dessicant d'une partie du courant gazeux traité lors de l'étape de déshydratation (non représentée sur la figure), est évacuée du procédé par le conduit 214.

La phase vapeur sortant de l'évaporateur E203 par le conduit 216 est envoyée dans le ballon B201.

D'autres configurations peuvent être adoptées pour le procédé selon l'invention; par exemple l'évaporateur E4 de la figure 1 (E203 de la figure 2) peut être supprimé, l'agent de strippage étant introduit liquide dans le ballon réservoir B1 de la figure 1 (B201 de la figure 2), où il sera vaporisé par contact direct avec le dessicant liquide à haute température.

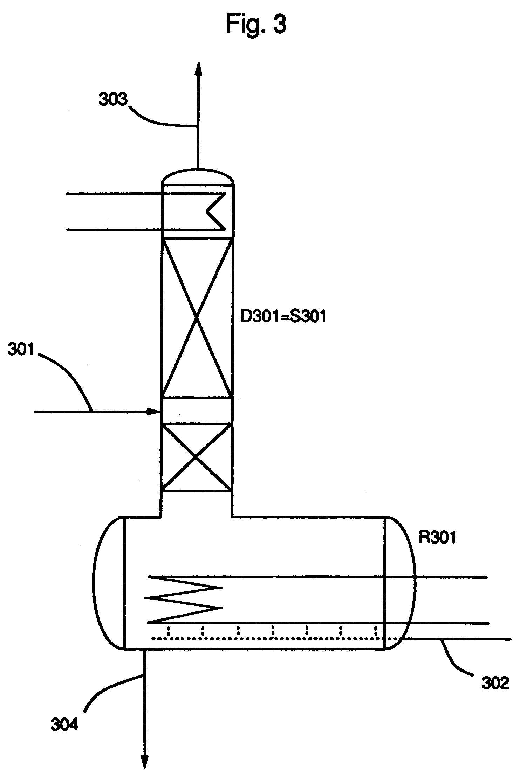

Une autre modification du procédé de l'invention consiste à réaliser les étapes de distillation et de strippage simultanément comme représenté sur la figure 3: la charge arrive par le conduit 301, l'agent de strippage est introduit, préalablement vaporisé ou non, directement dans le rebouilleur R301 par le conduit 302, le dispositif de distillation D301 et la zone de strippage S301 étant alors confondus. Le dessicant régénéré quitte le rebouilleur par le conduit 304, tandis que la vapeur quitte le dispositif de distillation D301 par le conduit 303.

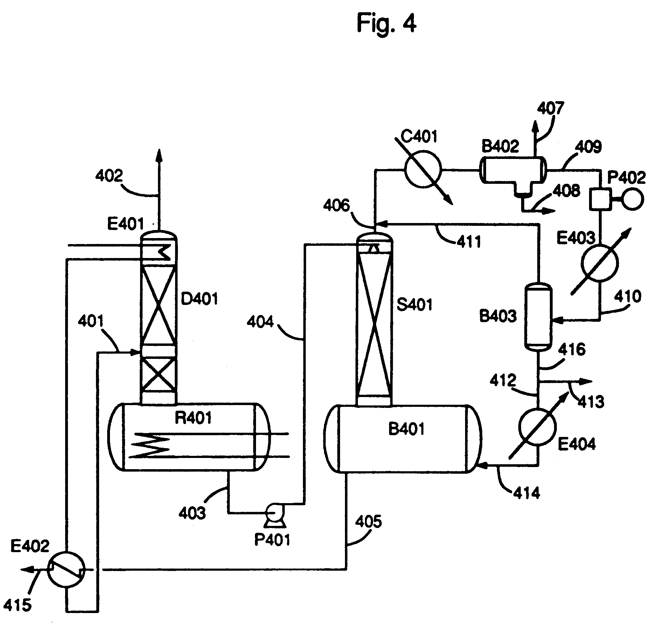

Une autre variante du procédé de l'invention consiste à réaliser les étapes de distillation, de rebouillage, de strippage et de condensation comme représenté sur la figure 4: la charge, après avoir traversé les échangeurs E401 et E402, est introduite par le conduit 401 dans le dispositif de distillation D401, et tombe par gravité dans le rebouilleur R401. La phase vapeur générée dans le rebouilleur R401 remonte le dispositif de distillation D401 puis quitte ledit dispositif par le conduit 402. Le dessicant partiellement régénéré est pompé du rebouilleur R401, à travers la pompe P401, et via les conduits 403 et 404, vers la zone de strippage S401, laquelle surmonte le ballon-réservoir B401. Le dessicant régénéré quitte le ballon B401 par le conduit 405, chauffe la charge dans l'échangeur E402 et est évacué du procédé par le conduit 415. L'agent de strippage et l'eau strippée quittent la zone de strippage S401 par le conduit 406, sont mélangés, le cas échéant, à la vapeur arrivant du ballon B403 par le conduit 411, puis refroidis dans le condenseur C401 et séparés dans le ballon B402, dont les composés légers sortent sous forme vapeur par le conduit 407, l'eau et les autres produits hydrophiles éventuellement présents sont évacués par le conduit 408, l'agent de strippage et les autres produits hydrophobes éventuellement présents sont envoyés par le conduit 409 et à travers la pompe P402 vers l'échangeur E403, où sont générées une phase vapeur V1 enrichie en eau et une phase liquide L1 appauvrie en eau. Les phases V1 et L1 sont envoyées par le conduit 410 vers le ballon B403; la phase vapeur V1 en sort par le conduit 411 et est mélangée à la vapeur sortant de la zone de strippage S401 par le conduit 406; la phase liquide L1 sort du ballon B403 par le conduit 416, puis est divisée en une partie excédentaire évacuée du procédé par le conduit 413 et une partie fixe envoyée dans l'évaporateur E404 via le conduit 412, vaporisée et introduite dans le ballon réservoir B401 via le conduit 414. Une autre solution consiste à réinjecter l'agent de strippage et l'eau strippée quittant S401 par 406 dans le rebouilleur R401, et à les condenser et séparer en aval du dispositif de distillation D401, comme dans les schémas précédents (Fig 1 à 3).

Le procédé selon l'invention peut être appliqué, par exemple, à la régénération d'un dessicant de la famille des glycols, comme le monoéthylène glycol (MEG), le diéthylène glycol (DEG), le triéthylène glycol (TEG) ou le tétraéthylène glycol (T4EG); ledit dessicant pouvant par exemple être utilisé pour déshydrater un gaz naturel ou un gaz de raffinerie.

L'agent de strippage peut être, par exemple, un hydrocarbure ou un mélange d'hydrocarbures, et peut dans ce cas contenir une proportion significative d'aromatiques et de benzène en particulier.

Un cas particulièrement favorable est celui où le dessicant absorbe dans l'effluent à déshydrater des produits de nature compatible avec l'agent de strippage tel qu'il est défini dans la présente invention. Le procédé est alors excédentaire en agent de strippage, ce qui non seulement dispense de tout appoint mais peut être source de profit.

Cependant ces applications ne sont pas limitatives, et le procédé selon l'invention peut être appliqué à la régénération de tout dessicant liquide, indépendamment de la nature de l'effluent déshydraté.

L'exemple suivant illustre l'invention.

### EXEMPLE

Dans cet exemple, on procède suivant le schéma représenté sur la figure 1. L'effluent à traiter qui est du triéthylène glycol (TEG) ayant servi à déshydrater un gaz naturel riche en benzène, arrive par le conduit 1 à la température de 41°C, à la pression de 1,2 bar, son débit est de 3472 kg/h, sa composition massique est la suivante:

| | | | |
|---|---|---|---|
| TEG | 94,99 % | Benzène | 1,67 % |
| Eau | 3,17 % | Autres hydrocarbures | 0,17 % |

La charge passe dans l'échangeur E1, d'une puissance de 12,5 kW, dont elle sort par le conduit 2 à la température de 46°C, rentre dans l'échangeur E2, d'une puissance de 259 kW, où elle est réchauffée jusqu'à la température de 146°C par le TEG régénéré sortant du ballon-réservoir B1 par le conduit 4. Sortant de l'échangeur E2, la charge est introduite par le conduit 3 dans le dispositif de distillation D1, lequel surmonte successivement de bas en haut le rebouilleur R1,d'une puissance de 177 kW, dans lequel la température est de 204°C, une zone de strippage S1 et un ballon-réservoir B1 dans lesquels le TEG partiellement régénéré est mis en contact à contre-courant avec l'agent de strippage arrivant sous forme vapeur par le conduit 16. La pression dans le dispositif de distillation D1 et dans le rebouilleur R1 est de 1,1 bar, la pression dans la zone de strippage S1 et dans le ballon-réservoir B1 est de 1,2 bar. Le TEG régénéré quitte le ballon B1 par le conduit 4 à la température de 194 °C, chauffe dans l'échangeur E2 la charge arrivant de l'échangeur E1 par le conduit 2, et est évacué du procédé par le conduit 5 sous un débit de 3330 kg/h à la température de 84°C. Sa composition massique est la suivante:

| | |
|---|---|
| TEG | 98,95 % |
| Eau | 33 ppm |
| Benzène | 1,03 % |
| Autres hydrocarbures | 144 ppm |

L'eau et l'agent de strippage sous forme vapeur quittent le dispositif de distillation D1 par le conduit 6 sous un débit de 662 kg/h à la température de 114°C. La composition massique de ce flux est la suivante:

| | |
|---|---|
| Eau | 16,63 % |
| Benzène | 79,39 % |
| Autres hydrocarbures | 3,68 % |
| TEG | 0,30 % |

Ce flux est ensuite mélangé à la vapeur arrivant du ballon B3 par le conduit 12 sous un débit de 163 kg/h à la température de 80°C, et dont la composition massique est la suivante:

| | |
|---|---|
| Eau | 0,57 % |
| Benzène | 85,23 % |
| Autres hydrocarbures | 14,20 % |

Le mélange est refroidi dans le condenseur C1, d'une puissance de 175 kW, jusqu'à la température de 40°C, à la pression de 1 bar et envoyé par le conduit 7 vers le ballon B2 d'où sortent trois flux :
- les hydrocarbures légers sont évacués du procédé par le conduit 8 sous un débit de 8,7 kg/h, avec la composition massique suivante:

| | | | |
|---|---|---|---|
| Eau | 3,08 % | Propanes | 14,59 % |
| Benzène | 42,00 % | Butanes | 9,21 % |
| Méthane | 7,40 % | Pentanes | 5,84 % |
| Ethane | 15,49 % | Hexanes | 2,39 % |

- la phase aqueuse est évacuée du procédé par le conduit 9 sous un débit de 112 kg/h, la composition massique de ce flux est la suivante :

| | |
|---|---|
| Eau | 98,05 % |
| Benzène | 0,19 % |
| TEG | 1,76 % |

- l'agent de strippage est envoyé par le conduit 10 et à travers la pompe P1 vers l'échangeur E3, d'une puissance de 34 kW, sous un débit de 704 kg/h, la composition massique de ce flux est la suivante:

| | |
|---|---|
| Eau | 0,15 % |
| Benzène | 93,73 % |
| Autres hydrocarbures | 6,12 % |

Sortant partiellement vaporisé de l'échangeur E3 à la température de 80°C sous une pression de 1,2 bar, l'agent de strippage rentre dans le ballon B3. De là, la vapeur est envoyée par le conduit 12 en amont du condenseur C1. Le liquide, dont la teneur massique en eau est de 0,02 %, sort du ballon B3 par le conduit 13, est divisé en une partie excédentaire évacuée du procédé sous un débit de 21 kg/h et une partie envoyée vers l'évaporateur E4, d'une puissance de 70 kW, par le conduit 15 sous un débit de 520 kg/h. Ladite partie sort totalement vaporisée de l'évaporateur E4, à la température de 150°C et entre par le conduit 16 dans le ballon-réservoir B1.

Le procédé mis en oeuvre dans cet exemple a permis de régénérer le dessicant (TEG) jusqu'à une teneur résiduelle en eau inférieure à 50 ppm. De plus la teneur résiduelle en eau de l'agent de strippage a été divisée par 8 par un simple chauffage, en vaporisant moins d'un quart de l'agent dessicant dans l'échangeur E3, ceci bien que l'eau soit un produit plus lourd que l'agent de strippage qui est composé majoritairement de benzène.

## Revendications

1. Procédé de régénération d'un dessicant liquide, utilisant un agent de strippage, qui est liquide à température et pression ambiante, et forme un hétéroazéotrope avec l'eau,
le procédé comprenant les étapes suivantes:
a) une étape de rebouillage du dessicant liquide chargé en eau;
b) une étape de distillation dudit dessicant, comprenant au moins un étage de rectification;
c) une étape de strippage du dessicant liquide partiellement régénéré lors des étapes (a) et (b), par l'agent de strippage vaporisé;
d) une étape de condensation de la vapeur sortant de l'étape de distillation (b), condensation générant deux phases liquides, l'une majoritaire en eau, l'autre majoritaire en agent de strippage;
e) le chauffage de la phase liquide riche en agent de strippage issue de l'étape (d), chauffage générant une phase vapeur plus riche en eau que ladite phase liquide et une phase liquide appauvrie en eau; et
f) le renvoi de la phase liquide issue de l'étape (e) vers l'étape (c).

2. Procédé selon la revendication 1, caractérisé en ce que la phase vapeur générée lors de l'étape (e) est renvoyée en amont de l'étape (d).

3. Procédé selon l'une quelconque des revendications 1 et 2, caractérisé en ce que la phase liquide appauvrie en eau issue de l'étape (d) est en partie envoyée vers l'étape (b), où elle est mise en contact à contre-courant avec la vapeur de distillation.

4. Procédé selon l'une quelconque des revendications 1 à 3, caractérisé en ce que l'agent de strippage déshydraté issu de l'étape (e) est vaporisé avant d'être envoyé vers l'étape de strippage (c).

5. Procédé selon l'une quelconque des revendications 1 à 3, caractérisé en ce que l'agent de strippage déshydraté issu de l'étape (e) est envoyé sous forme liquide vers l'étape de strippage (c) et vaporisé au cours de celle-ci.

6. Procédé selon l'une quelconque des revendications 1 à 5, caractérisé en ce que les étapes (b) et (c) sont réalisées dans des dispositifs distincts.

7. Procédé selon l'une quelconque des revendications 1 à 5, caractérisé en ce que les étapes (b) et (c) sont réalisées simultanément dans le même dispositif, l'agent de strippage étant introduit dans la zone de rebouillage de l'étape (a).

8. Procédé selon la revendication 7, caractérisé en ce que l'agent de strippage est introduit dans la zone de rebouillage sous forme liquide où il est vaporisé.

9. Procédé selon la revendication 7, caractérisé en ce que l'agent de strippage est vaporisé avant d'être introduit dans la zone de rebouillage.

10. Procédé selon l'une quelconque des revendications 1 à 9, caractérisé en ce que le dessicant liquide est un glycol.

11. Procédé selon la revendication 10, caractérisé en ce que le dessicant liquide est du triéthylène glycol.

12. Procédé selon l'une quelconque des revendications 1 à 11, caractérisé en ce que l'agent de strippage est un mélange d'hydrocarbures.

13. Procédé selon la revendication 12, caractérisé en ce que l'agent de strippage contient majoritairement du benzène.

## Claims

1. A liquid dessicant regeneration process using a stripping agent which is liquid at ambient temperature and pressure, and forms a heteroazeotrope with water,
the process comprising the following steps :
(a) a reboil step for the water-laden liquid dessicant;
(b) a distillation step for said dessicant, comprising at least one rectification step;
(c) a stripping step carried out on the partially regenerated liquid dessicant during steps (a) and (b), using the vapourised stripping agent;
(d) a condensation step for the vapour exiting distillation step (b), the condensation producing two liquid phases, one mainly water and the other mainly stripping agent;
(e) heating the stripping agent-rich liquid phase exiting step (d) to generate a vapour phase which is richer in water than said liquid phase and a water-depleted liquid phase; and
(f) returning the liquid phase exiting step (e) to step (c).

2. Process according to claim 1, characterised in that the vapour phase generated during step (e) is returned to a position upstream of step (d).

3. Process according to claim 1 or claim 2, characterised in that a portion of the water-depleted liquid phase exiting step (d) is returned to step (b) and placed in contact with a counter-current of the distillation vapour.

4. Process according to any one of claims 1 to 3, characterised in that the dehydrated stripping agent exiting step (e) is vapourised before being transported to stripping step (c).

5. Process according to any one of claims 1 to 3, characterised in that the dehydrated stripping agent exiting step (e) is transported in liquid form to stripping step (c) and vapourised during the course thereof.

6. Process according to any one of claims 1 to 5, characterised in that steps (b) and (c) are carried out in separate apparatus.

7. Process according to any one of claims 1 to 5, characterised in that steps (b) and (c) are carried out simultaneously in the same apparatus, the stripping agent being introduced into the reboil zone of step (a).

8. Process according to claim 7, characterised in that the stripping agent is introduced into the reboil zone in liquid form and is vapourised therein.

9. Process according to claim 7, characterised in that the stripping agent is vapourised before introduction into the reboil zone.

10. Process according to any one of claims 1 to 9, characterised in that the liquid dessicant is a glycol.

11. Process according to claim 10, characterised in that the liquid dessicant is triethylene glycol.

12. Process according to any one of the claims 1 to 11, characterised in that the stripping agent is a mixture of hydrocarbons.

13. Process according to claim 12, characterised in that the stripping agent is mainly constituted by benzene.

## Patentansprüche

1. Verfahren zur Regenerierung eines flüssigen Trocknungsmittels unter Verwendung eines Abstreifmittels, das bei Umgebungstemperatur und -druck flüssig ist und mit Wasser ein Heteroazeotrop bildet, wobei das verfahren die folgenden Schritte umfaßt:
(a) einen Schritt des Aufkochens des flüssigen, mit Wasser beladenen Trocknungsmittels;
(b) einen Schritt der Destillation des Trocknungsmittels, der wenigstens einen Schritt der Rektifizierung umfaßt;
(c) einen Schritt des Abstreifens des während der Schritte (a) und (b) teilweise regenerierten, flüssigen Trocknungsmittels durch das verdampfte Abstreifmittel;
(d) einen Schritt der Kondensation des den Schritt der Destillation (b) verlassenden Dampfes, wobei die Kondensation zwei flüssige Phasen erzeugt, einen Hauptteil aus Wasser, der andere Hauptteil aus Abstreifmittel;
(e) das Aufheizen der an Abstreifmittel reichen flüssigen Phase aus dem Schritt (d), wobei das Erhitzen eine an Wasser reichere Dampfphase wie die flüssige Phase und eine an Wasser verarmte flüssige Phase erzeugt, und
(f) das Zurückschicken der aus dem Schritt (e) stammenden flüssigen Phase zum Schritt (c).

2. Verfahren nach Anspruch 1, dadurch gekennzeichnet, daß die während des Schrittes (e) erzeugte Dampfphase stromaufwärts vom Schritt (d) zurückgeschickt wird.

3. Verfahren nach irgendeinem der Ansprüche 1 und 2, dadurch gekennzeichnet, daß die an Wasser verarmte, aus dem Schritt (d) stammende flüssige Phase teilweise zum Schritt (b) geschickt wird, wo sie im Gegenstrom mit dem Dampf der Destillation in Kontakt gebracht wird.

4. Verfahren nach irgendeinem der Ansprüche 1 bis 3, dadurch gekennzeichnet, daß das dehydratisierte, aus dem Schritt (e) stammende Abstreifmittel verdampft wird, bevor es zum Schritt des Abstreifens (c) geschickt wird.

5. Verfahren nach irgendeinem der Ansprüche 1 bis 3, dadurch gekennzeichnet, daß das dehydratisierte, aus dem Schritt (e) stammende Abstreifmittel in flüssiger Form zum Schritt des Abstreifens (c) geschickt und im Verlauf dessen verdampft wird.

6. Verfahren nach irgendeinem der Ansprüche 1 bis 5, dadurch gekennzeichnet, daß die Schritte (b) und (c) in verschiedenen Vorrichtungen durchgeführt werden.

7. Verfahren nach irgendeinem der Ansprüche 1 bis 5, dadurch gekennzeichnet, daß die Schritte (b) und (c) gleichzeitig in der gleichen Vorrichtung durchgeführt werden, wobei das Abstreifmittel in die Aufkochzone des Schrittes (a) eingeführt wird.

8. Verfahren nach Anspruch 7, dadurch gekennzeichnet, daß das Abstreifmittel in die Aufkochzone in flüssiger Form eingeführt wird, wo es verdampft wird.

9. Verfahren nach Anspruch 7, dadurch gekennzeichnet, daß das Abstreifmittel verdampft wird, bevor es in die Aufkochzone eingeführt wird.

10. Verfahren nach irgendeinem der Ansprüche 1 bis 9, dadurch gekennzeichnet, daß das flüssige Trocknungsmittel ein Glykol ist.

11. Verfahren nach Anspruch 10, dadurch gekennzeichnet, daß das flüssige Trocknungsmittel Triethylenglykol ist.

12. Verfahren nach irgendeinem der Ansprüche 1 bis 11, dadurch gekennzeichnet, daß das Abstreifmittel eine Mischung von Kohlenwasserstoffen ist.

13. Verfahren nach Anspruch 12, dadurch gekennzeichnet, daß das Abstreifmittel hauptsächlich Benzol enthält.
